# FASCICULE DE BREVET EUROPEEN

(11) **EP 3 555 253 B1**
(45) Date de publication et mention de la délivrance du brevet: **11.10.2023**
(21) Numéro de dépôt: 17825815.8
(22) Date de dépôt: 15.12.2017
(51) Int. Cl.: C10M 175/00

(54) **PROCÉDÉ DE TRAITEMENT DES HUILES USAGÉES**
VERFAHREN ZUR VERARBEITUNG VON ALTÖLEN
METHOD FOR PROCESSING USED OILS

(30) Priorité: 16.12.2016 FR 1662675
(43) Date de publication de la demande: 23.10.2019
(73) Titulaire: TotalEnergies OneTech, 92400 Courbevoie (FR)
(72) Inventeur: CHAMPAGNE, Nicolas, 69300 Caluire (FR); BLAIN, Dominique, 78112 Fourqueux (FR)
(74) Mandataire: Lavoix
(86) Numéro de dépôt international: PCT/EP2017/083155
(87) Numéro de publication internationale: WO 2018/109208

(56) Documents cités:
- EP-A2- 0 275 148
- WO-A1-93/00416
- WO-A1-2004/090083
- Calgon: "Data Sheet Safety Message", , 31 décembre 2015 (2015-12-31), XP055394853, Extrait de l'Internet: URL:http://www.calgoncarbon.com/wp-content /uploads/product-literature/Calgon-Carbon- HPC-830-Series.pdf [extrait le 2017-07-31]

## Description

La présente demande concerne le traitement des compositions lubrifiantes usagées. La présente demande concerne également un procédé de préparation de composition lubrifiante régénérée, pouvant être utilisée en tant que huile de base, à partir d'une composition lubrifiante usagée.

Les compositions lubrifiantes usagées (ou huiles usagées) peuvent être collectées puis régénérées afin d'être utilisées en base lubrifiante.

Il existe des procédés de traitement de ces compositions lubrifiantes usagées mettant en oeuvre notamment une ou plusieurs distillations. Cependant, les compositions lubrifiantes régénérées ainsi obtenues présentent une quantité importante d'hydrocarbures aromatiques polycycliques (HAP). Les HAP sont des constituants naturels du charbon et du pétrole, proviennent de la combustion incomplète de matières organiques telles que les carburants ou de l'oxydation des compositions lubrifiantes. Des études récentes ont montré que ces HAP, et notamment le Benzo[a]Pyrène (ou benzo-a-pyrène ou BaP), ont un impact potentiel sur la santé. Le BaP est notamment classé comme cancérogène avéré, d'autres HAP sont quant à eux classés comme cancérogènes probables ou cancérogènes possibles. Les HAP suivants sont notamment considérés comme dangereux : chrysene, benzo[b]fluoranthene, benzo[j]fluoranthene, benzo[k]fluoranthene, benzo[e]pyrene, benzo[a]pyrene, dibenz[a,h]anthracene, benz[a]anthracene.

Il y a donc un intérêt à pouvoir réduire la quantité, voire éliminer, les HAP des compositions lubrifiantes régénérées. Par ailleurs, des restrictions légales ont été mises en place sur certaines applications où l'exposition était jugée trop importante, cela concerne notamment le domaine du travail des métaux. Dans les applications lubrifiantes, la recommandation R451 « Prévention des risques chimiques causés par les fluides de coupe dans les activités d'usinage de métaux » précise que la concentration en BaP dans le fluide ne doit pas dépasser 100 µg/kg (100 ppb).

Il existe des procédés par extraction solvant/solvant qui permettent de réduire la teneur en HAP des compositions lubrifiantes régénérées. Cependant, cela nécessite une installation industrielle complexe augmentant ainsi le coût de traitement. De plus, les solvants utilisés sont généralement le N-Méthyl-2-pyrrolidone ou le furfural qui sont respectivement reprotoxique et cancérigène. Ces procédés ne permettent pas non plus d'éliminer spécifiquement le BaP.

Il existe également des procédés catalytiques similaires à ceux utilisés en raffinerie pour la préparation des huiles de groupe Il et III définies selon la classification API (ou leurs équivalents selon la classification ATIEL). Ce procédé, bien qu'étant efficace est très onéreux.

Il existe donc un intérêt à fournir un procédé de traitement des compositions lubrifiantes usagées qui permette de manière simple, sans danger et économique de réduire, voire d'éliminer, les HAP notamment choisis parmi chrysene, benzo[b]fluoranthene, benzo[j]fluoranthene, benzo[k]fluoranthene, benzo[e]pyrene, benzo[a]pyrene, dibenz[a,h]anthracene et/ou benz[a]anthracene.

Un objectif de la présente invention est de fournir un procédé de traitement des compositions lubrifiantes usagées qui permette de réduire, voire d'éliminer, les HAP notamment choisis parmi chrysene, benzo[b]fluoranthene, benzo[j]fluoranthene, benzo[k]fluoranthene, benzo[e]pyrene, benzo[a]pyrene, dibenz[a,h]anthracene et/ou benz[a]anthracene, notamment le BaP.

Un autre objectif de la présente invention est de fournir un tel procédé qui soit simple de mise en oeuvre et économique.

Un objectif de l'invention est encore de fournir un tel procédé qui ne soit pas dangereux et ne mette pas en oeuvre de produits toxiques.

Un autre objectif encore de la présente invention est de fournir un procédé de préparation d'une composition lubrifiante comprenant moins de 100 ppb de BaP à partir de compositions lubrifiante usagées.

D'autres objectifs encore apparaîtront à la lecture de la description de l'invention qui suit.

Ces objectifs sont remplis pas la présente invention qui concerne un procédé de réduction de la teneur en hydrocarbures aromatiques polycycliques (HAP), notamment choisis parmi chrysene, benzo[b]fluoranthene, benzo[j]fluoranthene, benzo[k]fluoranthene, benzo[e]pyrene, benzo[a]pyrene, dibenz[a,h]anthracene et/ou benz[a]anthracene, d'une composition lubrifiante usagée comprenant au moins une étape préalable de distillation de la composition lubrifiante usagée puis le passage de ladite composition lubrifiante usagée sur du charbon actif, ledit procédé ne comprenant pas d'étape d'extraction au solvant, la quantité de charbon actif mise en oeuvre étant comprise entre 0,5 et 60 g par litre de composition lubrifiante.

Par étape d'extraction au solvant on entend toute étape d'extraction liquide/liquide.

Dans le cadre de la présente invention, on entend également par « passage de la composition lubrifiante usagée sur du charbon actif » l'écoulement de la composition lubrifiante usagée sur le charbon actif.

Dans le cadre de la présente invention, on entend par composition lubrifiante usagée toute composition lubrifiante ayant été utilisée pour la lubrification de pièces, notamment de pièces mécaniques, notamment de moteur, en particulier de moteur de véhicule automobile. Du fait de leur origine, lubrification de moteur, ces compositions lubrifiantes usagées comprennent une teneur importante en HAP, notamment choisis parmi chrysene, benzo[b]fluoranthene, benzo[j]fluoranthene, benzo[k]fluoranthene, benzo[e]pyrene, benzo[a]pyrene, dibenz[a,h]anthracene et/ou benz[a]anthracene, et notamment BaP. Les compositions lubrifiantes usagées mises en oeuvre selon l'invention peuvent être toute composition lubrifiante, notamment comprenant des huiles de base choisies parmi les huiles d'origine minérale ou synthétique, choisies parmi les huiles des groupes I à V selon les classes définies dans la classification API (ou leurs équivalents selon la classification ATIEL) (tableau A), seules ou en mélanges.

**Tableau A**

| | Teneur en saturés | Teneur en soufre | Indice de viscosité (VI) |
|---|---|---|---|
| Groupement I Huiles minérales | < 90 % | > 0,03 % | 80 ≤ VI < 120 |
| Groupement Il Huiles hydrocraquées | ≥ 90% | ≤ 0,03 % | 80 ≤ VI < 120 |
| Groupement III Huiles hydrocraquées ou hydro-isomérisées | ≥ 90% | ≤ 0,03 % | ≥ 120 |
| Groupement IV | polyalphaoléfines (PAO) | | |
| Groupement V | Esters et autres bases non incluses dans les groupes I à IV | | |

Ces compositions lubrifiantes usagées peuvent également comprendre tout type d'additif généralement utilisé dans les compositions lubrifiantes tel que par exemple les détergents, les additifs anti-usure, les additifs extrême-pression, les améliorants de l'indice de viscosité, les dispersants, les antioxydants, les améliorants du point d'écoulement, les agents anti-mousse, et les modificateurs de frottements et leurs mélanges.

De préférence, dans le procédé selon l'invention, la quantité de charbon actif mise en oeuvre est comprise entre 0,5 et 50 g par litre de composition lubrifiante usagée, de préférence de 1 à 50 g/l, de préférence entre 1 et 30 g/l, par exemple entre 5 et 60g/l, de préférence entre 5 et 50 g/l.

Le débit de passage de la composition lubrifiante usagée peut être compris entre 1m³/h et 15 m³/h, par exemple entre 5 et 10m³/h.

De préférence, dans le procédé de l'invention le charbon actif est caractérisé par une densité comprise entre 200 et 500 kg/m³, par exemple mesurée selon la norme ASTDM D2854.

De préférence, le charbon actif est un charbon de houille, de préférence comprenant de 70 à 95%, avantageusement de 80 à 90% en poids de carbone.

Le procédé selon l'invention peut comprendre, de façon avantageuse, une étape préalable de filtration de la composition lubrifiante usagée. Cette filtration peut être mise en oeuvre par toute méthode connue de l'homme du métier. Cette étape de filtration peut être une étape de filtration particulaire ou non. Elle peut par exemple être mise en oeuvre par des systèmes type terre de diatomée. De manière particulièrement avantageuse, cette étape permet de prolonger l'activité du charbon actif en augmentant sa durée de vie et donc le temps entre deux renouvellements ou deux réactivations du charbon actif. La réactivation du charbon actif peut se faire par toute méthode connue de l'homme du métier pour régénérer le charbon actif, par exemple par un traitement à haute température, par exemple supérieure ou égale à 800°C. Cette étape préalable de filtration permet d'allonger la durée au cours laquelle le passage de l'huile usée sur le charbon actif est efficace en termes de réduction de teneur en HAP, de préférence BaP.

Le procédé selon l'invention comprend une ou plusieurs étapes préalables de distillation de la composition lubrifiante usagée. Ces étapes de distillation peuvent être mises en oeuvre par toute technique connue de l'homme du métier. De façon avantageuse, le procédé de l'invention peut comprendre une étape de distillation permettant d'éliminer l'eau, suivie d'une étape de distillation pour éliminer le gazole et enfin une étape de distillation sous pression réduite. Les distillations peuvent par exemple être mises en oeuvre à une température comprise entre 100 et 400°C, et à une pression comprise entre 50 et 2000 Pa.

Le procédé selon l'invention peut comprendre, de façon avantageuse, les étapes préalables suivantes :
- une ou plusieurs étapes de distillation ; et
- une étape de filtration.

Ces étapes sont telles que définies plus haut.

De façon avantageuse, le procédé de l'invention permet de réduire significativement la teneur en HAP de la composition lubrifiante régénérée. De façon avantageuse, le procédé de l'invention permet d'obtenir une composition lubrifiante régénérée comprenant moins 100 ppb en chacun des HAP suivants chrysene, benzo[b]fluoranthene, benzo[j]fluoranthene, benzo[k]fluoranthene, benzo[e]pyrene, benzo[a]pyrene, dibenz[a,h]anthracene, benz[a]anthracène. La teneur de ces HAP étant déterminée selon la norme EN 16143.

De préférence le HAP est le benzo[a]pyrène (BaP). De façon avantageuse, le procédé de l'invention permet de réduire significativement la teneur en BaP de la composition lubrifiante régénérée. De façon avantageuse, le procédé de l'invention permet d'obtenir une composition lubrifiante régénérée comprenant moins de 100 ppb de BaP.

La présente invention concerne également un procédé de préparation d'une composition lubrifiante comprenant moins de 100 ppb en chacun des HAP suivants chrysene, benzo[b]fluoranthene, benzo[j]fluoranthene, benzo[k]fluoranthene, benzo[e]pyrene, benzo[a]pyrene, dibenz[a,h]anthracene, benz[a]anthracene, de préférence moins de 100 ppb de BaP, à partir d'une composition lubrifiante usagée, comprenant au moins une étape préalable de distillation puis le passage de ladite composition lubrifiante usagée sur du charbon actif, la quantité de charbon actif mise en oeuvre étant comprise entre 0,5 et 60 g par litre de composition lubrifiante usagée.

De préférence, dans le procédé selon l'invention, la quantité de charbon actif mise en oeuvre est comprise entre 0,5 et 50 g par litre de composition lubrifiante usagée, de préférence de 1 à 50 g/l, de préférence entre 1 et 30 g/l, par exemple entre 5 et 60g/l, de préférence entre 5 et 50 g/l.

Le procédé selon l'invention peut comprendre, de façon avantageuse, une étape préalable de filtration de la composition lubrifiante usagée telle que définie ci-dessus.

Le procédé selon l'invention comprend une ou plusieurs étapes préalables de distillation de la composition lubrifiante usagée telles que définies ci-dessus.

Le procédé selon l'invention peut comprendre, de façon avantageuse, les étapes préalables suivantes :
- une étape ou plusieurs étapes de distillation ; et
- une étape de filtration.

Ces étapes sont telles que définies plus haut.

**La présente demande va maintenant être décrite à l'aide d'exemples non limitatifs.**

Les caractéristiques d'une composition lubrifiante usagée de référence (Composition ref), ayant subi une distillation et une filtration préalable, son présentées dans le tableau ci-dessous.

| | **Norme utilisée pour déterminer les caractéristiques** | **Composition de référence** |
|---|---|---|
| Couleur | NF ISO 2049 | L4,5 |
| Viscosité à 100°C (mm2/s) | NF EN ISO 3104 | 5,28 |
| Viscosité à 40°C (mm2/s) | NF EN ISO 3104 | 28,8 |
| Indice de viscosité | NF ISO 2909 | 117 |
| Point d'écoulement en 3 bases (°C) | ISO 3016 | -12 |
| CCS à -20°C (mPa.s) | ASTM D 5293 | 1270 |
| CCS à -25°C (mPa.s) | | 2326 |
| Indice de réfraction à 20°C | ASTM D 1747 | 1,4707 |
| Masse volumique à 15°C (kg/m3) | NF EN ISO 12185 | 854,9 |
| Désaération(50°C) | NF ISO 9120 | 6,6 min |
| Point d'éclair Cleveland (°C) | NF EN ISO 2592 | 234 |
| Volatilité Noack (%m), proc B | CEC-L-40-A93 | 9,80% |
| Teneur en soufre | ASTM D 2622 | 0,22% |
| TBP simulée Largeur de coupe T95-T5 (°C) | IP480 | 178 |

Cette composition de référence est traitée selon le procédé de l'invention et passée sur différents charbon actif, les compositions résultantes (compositions 1 à 8) sont analysées pour déterminer leur composition en HAP sur la base de la norme NF EN 16143.

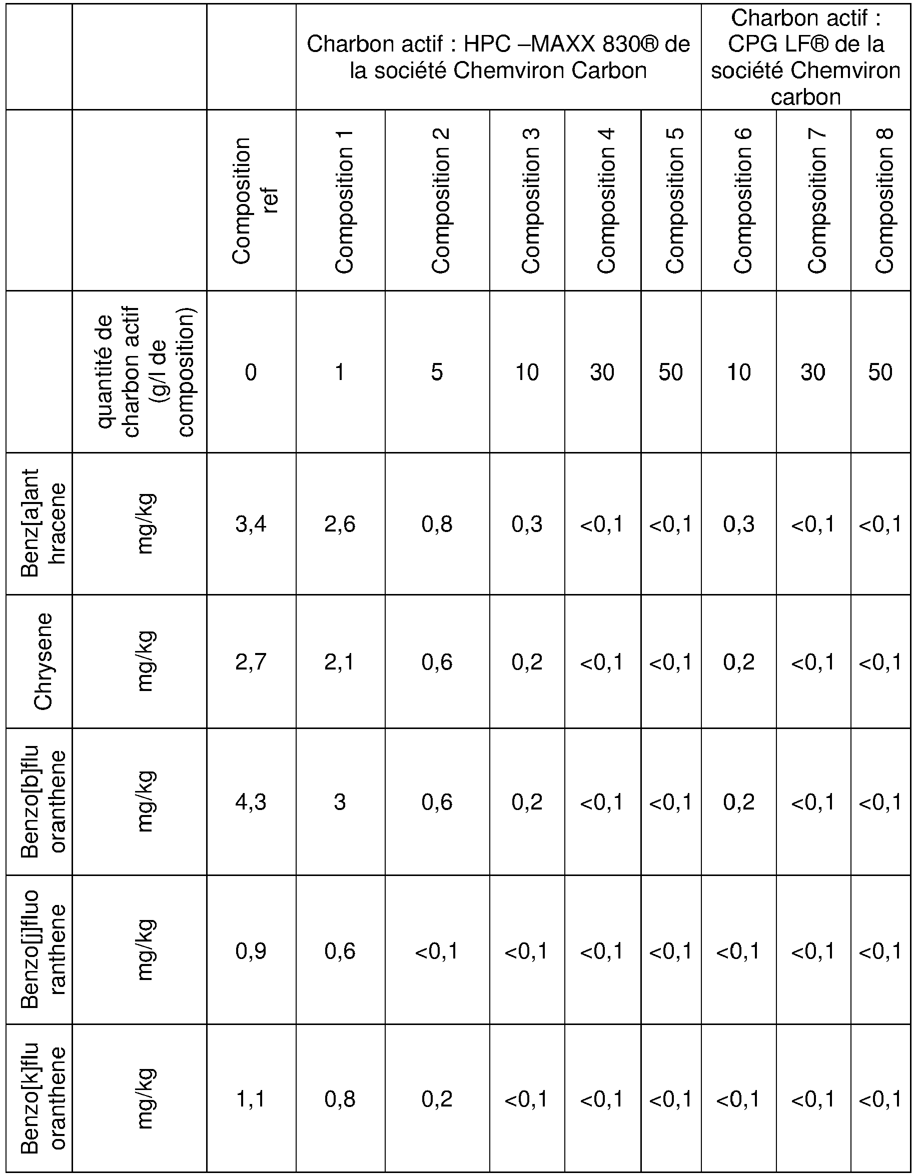

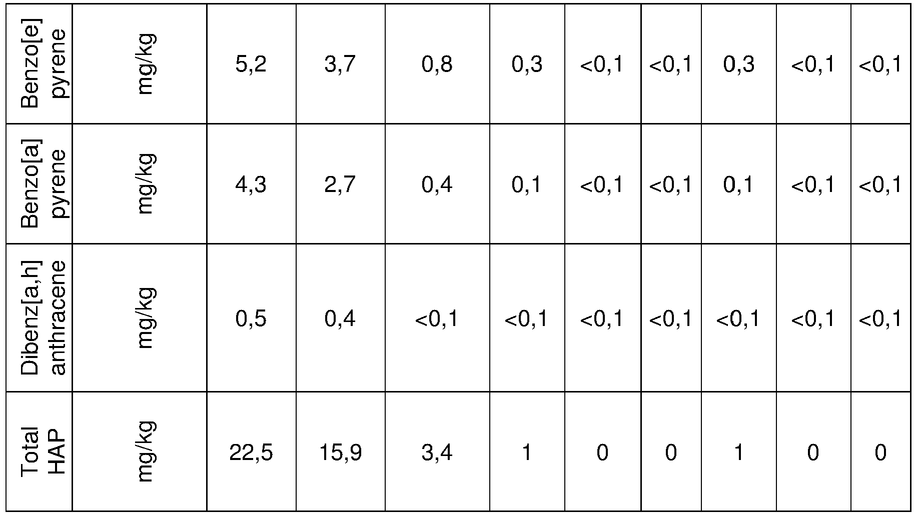

Ces résultats montrent que le procédé selon l'invention permet avantageusement de réduire la quantité de HAP dans les compositions lubrifiantes usagées et notamment le BaP.

Par ailleurs, le procédé selon l'invention permet également d'améliorer la couleur des compositions lubrifiantes résultantes comme montré dans le tableau ci-dessous.

| | Couleur ASTM D1500 |
|---|---|
| Composition de référence | 4,5 |
| Composition 1 | 3,9 |
| Composition 2 | 3,6 |
| Composition 3 | 3,4 |
| Composition 4 | 3,2 |
| Composition 5 | 3,1 |
| Composition 6 | 3,3 |
| Composition 7 | 3,3 |
| Composition 8 | 3,2 |

## Revendications

1. Procédé de réduction de la teneur en hydrocarbures aromatiques polycycliques (HAP) d'une composition lubrifiante usagée comprenant au moins une étape préalable de distillation de la composition lubrifiante usagée puis le passage de ladite composition lubrifiante usagée sur du charbon actif, ledit procédé ne comprenant pas d'étape d'extraction au solvant, la quantité de charbon actif mise en oeuvre étant comprise entre 0,5 et 60 g par litre de composition lubrifiante.

2. Procédé selon la revendication 1, dans lequel la quantité de charbon mise en oeuvre est comprise entre 1 et 50 g par litre de composition lubrifiante.

3. Procédé selon la revendication 1 ou 2, dans lequel le charbon actif est **caractérisé par** une densité comprise entre 200 et 500 kg/m³.

4. Procédé selon l'une quelconque des revendications 1 à 3, comprenant une étape préalable de filtration de la composition lubrifiante usagée.

5. Procédé selon l'une quelconque des revendications 1 à 4, dans lequel le HAP est le benzo-a-pyrène.

6. Procédé selon l'une quelconque des revendications 1 à 5, comprenant avant l'étape de passage sur charbon actif :
- une étape ou plusieurs étapes de distillation ; et
- une étape de filtration.

7. Procédé de préparation d'une composition lubrifiante comprenant moins de 100 ppb en chacun des HAP suivants : chrysene, benzo[b]fluoranthene, benzo[j]fluoranthene, benzo[k]fluoranthene, benzo[e]pyrene, benzo[a]pyrene, dibenz[a,h]anthracene, benz[a]anthracene, à partir d'une composition lubrifiante usagée, comprenant au moins une étape préalable de distillation puis le passage de ladite composition lubrifiante usagée sur du charbon actif, la quantité de charbon actif mise en oeuvre étant comprise entre 0,5 et 60 g par litre de composition lubrifiante.

8. Procédé selon la revendication 7, dans lequel le HAP est le benzo-a-pyrène.

9. Procédé selon la revendication 7 ou 8, comprenant une étape préalable de filtration de la composition lubrifiante usagée.

10. Procédé selon l'une quelconque des revendications 7 à 9, comprenant avant l'étape de passage sur charbon actif :
- une ou plusieurs étapes de distillation ; et
- une étape de filtration.

## Patentansprüche

1. Verfahren zur Verringerung des Gehalts an polyzyklischen aromatischen Kohlenwasserstoffen (PAK) in einer gebrauchten Schmiermittelzusammensetzung, umfassend mindestens einen vorherigen Destillationsschritt der gebrauchten Schmiermittelzusammensetzung und dann das Leiten der gebrauchten Schmiermittelzusammensetzung über Aktivkohle, wobei das Verfahren keinen Lösungsmittelextraktionsschritt umfasst, die Menge der eingesetzten Aktivkohle zwischen 0,5 und 60 g pro Liter Schmiermittelzusammensetzung ist.

2. Verfahren nach Anspruch 1, wobei die Menge an eingesetzter Kohle zwischen 1 und 50 g pro Liter Schmierstoffzusammensetzung ist.

3. Verfahren nach Anspruch 1 oder 2, wobei die Aktivkohle durch eine Dichte zwischen 200 und 500 kg/m³ gekennzeichnet ist.

4. Verfahren nach einem der Ansprüche 1 bis 3, umfassend einen vorherigen Schritt eines Filterns der gebrauchten Schmiermittelzusammensetzung.

5. Verfahren nach einem der Ansprüche 1 bis 4, wobei der PAK Benzo-a-pyren ist.

6. Verfahren nach einem der Ansprüche 1 bis 5, umfassend vor dem Leitungsschritt über Aktivkohle:
- einen oder mehrere Destillationsschritte; und
- einen Filtrationsschritt.

7. Verfahren zur Herstellung einer Schmiermittelzusammensetzung, umfassend weniger als 100 ppb in jedem der folgenden PAKs: Chrysen, Benzo[b]fluoranthen, Benzo[j]fluoranthen, Benzo[k]fluoranthen, Benzo[e]pyren, Benzo[a]pyren, Dibenz[a,h]anthracen, Benz[a]anthracen, aus einer gebrauchten Schmiermittelzusammensetzung, umfassend mindestens einen vorherigen Destillationsschritt und dann das Leiten der gebrauchten Schmiermittelzusammensetzung über Aktivkohle, wobei die Menge der eingesetzten Aktivkohle zwischen 0,5 und 60 g pro Liter Schmiermittelzusammensetzung ist.

8. Verfahren nach Anspruch 7, wobei der PAK Benzo-a-pyren ist.

9. Verfahren nach Anspruch 7 oder 8, umfassend einen vorherigen Schritt eines Filterns der gebrauchten Schmiermittelzusammensetzung.

10. Verfahren nach einem der Ansprüche 7 bis 9, umfassend vor dem Schritt eines Leitens über Aktivkohle:
- einen oder mehrere Destillationsschritte; und
- einen Filtrationsschritt.

## Claims

1. Method for lowering the content of polycyclic aromatic hydrocarbons (PAHs) in a used lubricant composition, comprising at least a prior step of distillation of the used lubricant composition and then the passing of said used lubricant composition over activated carbon, said method not comprising a solvent extraction step, the quantity of activated carbon applied being between 0.5 and 60 g per litre of lubricant composition.

2. The method according to claim 1, wherein the quantity of activated carbon used is between 1 and 50 g per litre of lubricant composition.

3. The method according to claim 1 or 2, wherein the activated carbon is **characterized by** a density of between 200 and 500 kg/m³.

4. The method according to any of claims 1 to 3, comprising a prior step to filter the used lubricant composition.

5. The method according to any of claims 1 to 4, wherein the PAH is benzo-a-pyrene.

6. The method according to any of claims 1 to 5, comprising before the step to pass over activated carbon:
- one or more distillation steps; and
- a filtering step.

7. Method for preparing a lubricant composition comprising less than 100 ppb of each of the following PAHs: chrysene, benzo[b]fluoranthene, benzo[j]fluoranthene, benzo[k]fluoranthene, benzo[e]pyrene, benzo[a]pyrene, dibenz[a,h]anthracene, benz[a]anthracene, from a used lubricant composition, comprising at least a prior step of distillation of the used lubricant composition and then the passing of said used lubricant composition over activated carbon, the quantity of activated carbon applied being between 0.5 and 60 g per litre of lubricant composition.

8. The method according to claim 7, wherein the PAH is benzo-a-pyrene.

9. The method according to claim 7 or 8, comprising a prior step to filter the used lubricant composition.

10. The method according to any of claims 7 to 9, , comprising before the step to pass over activated carbon:
- one or more distillation steps; and
- a filtering step.
